(19) Europäisches Patentamt / European Patent Office / Office européen des brevets

(11) **EP 3 313 930 B1**

(12) **EUROPEAN PATENT SPECIFICATION**

(45) Date of publication and mention of the grant of the patent:
**03.04.2019  Bulletin 2019/14**

(21) Application number: **16729222.6**

(22) Date of filing: **06.06.2016**

(51) Int Cl.:
*C08L 23/06* (2006.01)   *C08L 23/08* (2006.01)
*B32B 27/32* (2006.01)   *B32B 27/08* (2006.01)
*C08F 2/00* (2006.01)

(86) International application number:
**PCT/EP2016/062746**

(87) International publication number:
**WO 2016/206957 (29.12.2016 Gazette 2016/52)**

(54) **POLYETHYLENE COMPOSITION FOR FILMS**

POLYETHYLENZUSAMMENSETZUNG FÜR FOLIEN

COMPOSITION DE POLYÉTHYLÈNE POUR FILMS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2015   US 201562185238 P**

(43) Date of publication of application:
**02.05.2018   Bulletin 2018/18**

(73) Proprietor: **Basell Polyolefine GmbH**
**50389 Wesseling (DE)**

(72) Inventors:
• **VITTORIAS, Iakovos**
  **55129 Mainz (DE)**
• **MEIER, Gerhardus**
  **Houston TX 77077-1928 (US)**

• **SCHUELLER, Ulf**
  **64331 Weiterstadt (DE)**
• **MAUS, Andreas**
  **60431 Frankfurt (DE)**
• **WIESECKE, Jens**
  **64673 Zwingenberg (DE)**
• **MAVRIDIS, Harilaos**
  **Lebanon, Ohio 45036 (US)**

(74) Representative: **Gaverini, Gaetano Luigi Attilio**
**Basell Poliolefine Italia S.r.l.**
**Intellectual Property**
**P.le Donegani, 12**
**44122 Ferrara (IT)**

(56) References cited:
**EP-A1- 2 738 211     EP-A2- 2 256 160**
**WO-A1-2014/134193**

**Description**

FIELD OF THE INVENTION

The present disclosure provides a polyethylene composition having density from 0.945 to 0.958 g/cm$^3$ and high mechanical properties. In particular, the present composition is particularly suitable for preparing blown films due to its balance of Dart Drop Impact strength and bubble stability.
The present disclosure also relates to a multi-stage polymerization process for preparing the said polyethylene composition.

BACKGROUND OF THE INVENTION

Polyethylene, in particular multimodal polyethylene, is used on a large scale for producing films by the blown film extrusion process, thanks to its mechanical strength, processability, good chemical resistance and low intrinsic weight.
However, conventional blown films made of polyethylene have an inadequate balance of mechanical strength, particularly in terms of Dart Drop Impact strength (DDI), and processability. In fact, attempts to attain high DDI values results in an unacceptable worsening of the processability, particularly in terms of stability of the bubble formed in the blown film extrusion process, as disclosed in EP2256160.
It has now been found that by properly selecting the rheological, thermal and molecular features of the polyethylene composition, an improved balance of the said properties is achieved.
In particular, it has been found that the shear viscosity in the molten state and the crystallization time, in combination with the molecular structure of the polymer, play an important role in determining said properties.

SUMMARY OF THE INVENTION

The present disclosure provides a polyethylene composition having the following features:

1) density from 0.945 to 0.958 g/cm$^3$, in particular from 0.948 to 0.955 g/cm$^3$, determined according to ISO 1183 at 23°C;
2) ratio MIF/MIP from 20 to 43, in particular from 25 to 40, where MIF is the melt flow index at 190°C with a load of 21.60 kg, and MIP is the melt flow index at 190°C with a load of 5 kg, both determined according to ISO 1133;
3) MIF from 4.0 to less than 8.5 g/10 min., in particular from 4.5 to 8.0 g/10 min.;
4) HMWcopo index from 3.5 to 20;
5) long-chain branching index, LCBI, equal to or lower than 0.82, or lower than 0.80, in particular from 0.82 to 0.45 or from 0.80 to 0.45;

wherein the HMWcopo index is determined according to the following formula:

$$\mathrm{HMWcopo} = (\eta_{0.02} \times t_{\mathrm{maxDSC}})/(10\text{^}5)$$

where $\eta_{0.02}$ is the complex viscosity of the melt in Pa.s, measured at a temperature of 190°C, in a parallel-plate (or so-called plate-plate) rheometer under dynamic oscillatory shear mode with an applied angular frequency of 0.02 rad/s; the $t_{\mathrm{maxDSC}}$ is the time, in minutes, required to reach the maximum value of heat flow (in mW) of crystallization (time at which the maximum crystallization rate is achieved, equivalent to the t1/2 crystallization half-time) at a temperature of 124 °C under quiescent conditions, measured in isothermal mode in a differential scanning calorimetry apparatus, DSC; LCBI is the ratio of the measured mean-square radius of gyration $R_g$, measured by GPC-MALLS, to the mean-square radius of gyration for a linear PE having the same molecular weight at a mol. weight of 1,000,000 g/mol.
From the above defined features 2) and 3) it follows that the MIP values for the present polyethylene compositions range from about 0.09 to about 0.43 g/10 min. (approximated values).

BRIEF DESCRIPTION OF THE DRAWINGS

These and other features, aspects, and advantages of the present disclosure will become better understood with reference to the following description and appended claims, and accompanying drawing figure where:
The drawing is an illustrative embodiment of a simplified process-flow diagram of two serially connected gas-phase reactors suitable for use in accordance with various embodiments of ethylene polymerization processes disclosed herein to produce various embodiments of the polyethylene compositions disclosed herein.

It should be understood that the various embodiments are not limited to the arrangements and instrumentality shown in the drawing figure.

DETAILED DESCRIPTION OF THE INVENTION

The expression "polyethylene composition" is intended to embrace, as alternatives, both a single ethylene polymer and an ethylene polymer composition, in particular a composition of two or more ethylene polymer components, preferably with different molecular weights, such composition being also called "bimodal" or "multimodal" polymer in the relevant art.

Typically the present polyethylene composition consists of or comprises one or more ethylene copolymers.

All the features herein defined, comprising the previously defined features 1) to 5), are referred to the said ethylene polymer or ethylene polymer composition. The addition of other components, like the additives normally employed in the art, can modify one or more of said features.

The ratio MIF/MIP provides a rheological measure of molecular weight distribution.

Another measure of the molecular weight distribution is provided by the ratio $M_{w\_MALLS}/M_{n\_GPC}$, where $M_{w\_MALLS}$ is the weight average molar mass measured with MALLS coupled to GPC and $M_{n\_GPC}$ is the number average molar mass, measured by GPC (Gel Permeation Chromatography), as explained in the examples.

Preferred $M_{w\_MALLS}/M_{n\_GPC}$ values for the present polyethylene composition range from 15 to 40, preferably 17 to 37.

The $M_{w\_MALLS}$ values are preferably equal to or higher than 300,000 g/mol and lower than 550,000, preferably from 320,000 to 450,000 g/mol.

Moreover the present polyethylene composition has preferably at least one of the following additional features.

- z-average molecular weight Mz equal to or greater than 1,200,000 g/mol, in particular from 1,200,000 to 3,500,000 g/mol, measured by GPC-MALLS (Gel Permeation Chromatography coupled with Multi-angle laser-light scattering);
- comonomer content equal to or less than 2.5% by weight, in particular from 0.8 to 2% by weight, with respect to the total weight of the composition.

The comonomer or comonomers present in the ethylene copolymers are generally selected from olefins having formula $CH_2=CHR$ wherein R is an alkyl radical, linear or branched, having from 1 to 10 carbon atoms.

Specific examples are propylene, butene-1, pentene-1, 4-methylpentene-1, hexene-1, octene-1 and decene-1. A particularly preferred comonomer is hexene-1.

In particular, in a preferred embodiment, the present composition comprises:

A) 30 - 70% by weight, preferably 40 - 60% by weight of an ethylene homopolymer or copolymer (the homopolymer being preferred) with density equal to or greater than 0.960 $g/cm^3$ and melt flow index MIE at 190°C with a load of 2.16 kg, according to ISO 1133, of 30 g/10 min. or higher, preferably of 35 g/10 min. or higher;

B) 30 - 70% by weight, preferably 40 - 60% by weight of an ethylene copolymer having a MIE value lower than the MIE value of A), preferably lower than 0.5 g/10 min.

The above percent amounts are given with respect to the total weight of A) + B).

Specific MIE ranges for component A) are of 30 to 100 g/10 min., or 30 to 95 g/10 min., or 35 to 100 g/10 min., or 35 to 95 g/10 min.

As previously mentioned, the present polyethylene composition can be processed particularly well by the film blowing process.

The technique of blown film (also referred to as the Tubular Film) extrusion is well known for the production of thin plastic films. The process involves extrusion of a molten thermoplastic resin through an annular die, followed by "bubble-like" expansion of the molten web.

The present polyethylene composition ensures an adequate film bubble stability even under the typical processing conditions of large scale industrial plants. In other words, the film bubble coming out from the annular die remains stable even at high take-off speeds and shows no tendency to alter its geometry neither in axial direction nor in radial direction.

Preferably, the bubble has a frost line delimiting the molten material from the solidified material oscillating not more than ±2 cm in axial direction during the shock test (performed as detailed in the examples) at a maximal take-off speed.

The present disclosure further relates to a blown film comprising the present polyethylene composition as described above. In particular the blown film can be mono- or multilayer, wherein at least one layer comprises the present polyethylene composition.

The said blown film can have a thickness in the range from 8 to 200 $\mu$m, preferably from 10 to 100 $\mu$m.

The DDI of a 20 $\mu$m thick blown film of the present polyethylene composition has typically a DDI of higher than 200 g.

While no necessary limitation is known to exist in principle on the kind of polymerization processes and catalysts to be used, it has been found that the present polyethylene composition can be prepared by a gas phase polymerization process in the presence of a Ziegler-Natta catalyst.

A Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound supported on $MgCl_2$.

Preferred organometallic compounds are the organo-Al compounds.

Thus in a preferred embodiment, the present polyethylene composition is obtainable by using a Ziegler-Natta polymerization catalyst, more preferably a Ziegler-Natta catalyst supported on $MgCl_2$, even more preferably a Ziegler-Natta catalyst comprising the product of reaction of:

> a) a solid catalyst component comprising a Ti compound and optionally an electron donor compound ED supported on $MgCl_2$;
> b) an organo-Al compound; and optionally
> c) an external electron donor compound $ED_{ext}$.

Among suitable titanium compounds are the tetrahalides or the compounds of formula $TiX_n(OR^1)_{4-n}$, where $0 \leq n \leq 3$, X is halogen, preferably chlorine, and $R^1$ is $C_1$-$C_{10}$ hydrocarbon group. The titanium tetrachloride is the preferred compound.

The ED compound is generally selected from alcohol, ketones, amines, amides, nitriles, alkoxysilanes, aliphatic ethers, and esters of aliphatic carboxylic acids

Preferably the ED compound is selected among amides, esters and alkoxysilanes.

Excellent results have been obtained with the use of esters which are thus particularly preferred as ED compound. Specific examples of esters are the alkyl esters of C1-C20 aliphatic carboxylic acids and in particular C1-C8 alkyl esters of aliphatic mono carboxylic acids such as ethylacetate, methyl formiate, ethylformiate, methylacetate, propylacetate, i-propylacetate, n-butylacetate, i-butylacetate. Moreover, are also preferred the aliphatic ethers and particularly the C2-C20 aliphatic ethers, such as tetrahydrofurane (THF) or dioxane.

In the said solid catalyst component the $MgCl_2$ is the basic support, even if minor amount of additional carriers can be used. The $MgCl_2$ can be used as such or obtained from Mg compounds used as precursors that can be transformed into $MgCl_2$ by the reaction with halogenating compounds. Particularly preferred is the use of $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the ASTM-card reference of the spectrum of the non-active halide is diminished in intensity and broadened. In the X-ray spectra of preferred magnesium dihalides in active form said most intense line is diminished in intensity and replaced by a halo whose maximum intensity is displaced towards lower angles relative to that of the most intense line.

Particularly suitable for the preparation of the present polyethylene composition are the catalysts prepared by first contacting the titanium compound with the $MgCl_2$, or a precursor Mg compound, optionally in the presence of an inert medium, thus preparing the solid component a) containing a titanium compound supported on $MgCl_2$, which component a) is optionally contacted with the ED compound which is added to the reaction mixture alone or in a mixture with other compounds in which it represents the main component, optionally in the presence of an inert medium.

With the term "main component" we intend that the said ED compound must be the main component in terms of molar amount, with respect to the other possible compounds excluded inert solvents or diluents used to handle the contact mixture. The ED treated product can then be subject to washings with the proper solvents in order to recover the final product. If needed, the treatment with the ED compound desired can be repeated one or more times.

As previously mentioned, a precursor of $MgCl_2$ can be used as starting essential Mg compound. This can be selected for example among Mg compound of formula $MgR'_2$ where the R' groups can be independently C1-C20 hydrocarbon groups optionally substituted, OR groups, OCOR groups, chlorine, in which R is a C1-C20 hydrocarbon groups optionally substituted, with the obvious proviso that the R' groups are not simultaneously chlorine. Also suitable as precursors are the Lewis adducts between $MgCl_2$ and suitable Lewis bases. A particular and preferred class being constituted by the $MgCl_2 (R"OH)_m$ adducts in which R" groups are C1-C20 hydrocarbon groups, preferably C1-C10 alkyl groups, and m is from 0.1 to 6, preferably from 0.5 to 3 and more preferably from 0.5 to 2. Adducts of this type can generally be obtained by mixing alcohol and $MgCl_2$ in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034.

Particularly interesting are the $MgCl_2 \cdot (EtOH)_m$ adducts in which m is from 0.15 to 1.7 obtained subjecting the adducts with a higher alcohol content to a thermal dealcoholation process carried out in nitrogen flow at temperatures comprised between 50 and 150°C until the alcohol content is reduced to the above value. A process of this type is described in EP 395083.

The dealcoholation can also be carried out chemically by contacting the adduct with compounds capable to react with the alcohol groups.

Generally these dealcoholated adducts are also characterized by a porosity (measured by mercury method) due to pores with radius up to 0.1 $\mu$m ranging from 0.15 to 2.5 $cm^3/g$ preferably from 0.25 to 1.5 $cm^3/g$.

These adducts are reacted with the $TiX_n(OR^1)_{4-n}$ compound (or possibly mixtures thereof) mentioned above which is preferably titanium tetrachloride. The reaction with the Ti compound can be carried out by suspending the adduct in $TiCl_4$ (generally cold). The mixture is heated up to temperatures ranging from 80-150°C and kept at this temperature for 0.5-2 hours. The treatment with the titanium compound can be carried out one or more times. It can also be carried out in the presence of an electron donor compound as those mentioned above. At the end of the process the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated hydrocarbons.

As mentioned above, the solid component a) can be brought into contact with the ED compound under conditions able to fix on the solid an effective amount of donor. Due to the high versatility of this method, the amount of donor used can widely vary. As an example, it can be used in molar ratio with respect to the Ti content in the intermediate product ranging from 0.5 to 20 and preferably from 1 to 10. Although not strictly required the contact is typically carried out in a liquid medium such as a liquid hydrocarbon. The temperature at which the contact takes place can vary depending on the nature of the reagents. Generally it is comprised in the range from -10° to 150°C and preferably from 0° to 120°C. It is plane that temperatures causing the decomposition or degradation of any specific reagents should be avoided even if they fall within the generally suitable range. Also the time of the treatment can vary in dependence of other conditions such as nature of the reagents, temperature, concentration etc. As a general indication this contact step can last from 10 minutes to 10 hours more frequently from 0.5 to 5 hours. If desired, in order to further increase the final donor content, this step can be repeated one or more times. At the end of this step the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated or oxygenated hydrocarbons.

As previously mentioned, the said solid catalyst component is converted into catalysts for the polymerization of olefins by reacting it, according to known methods, with an organometallic compound of group 1, 2 or 13 of the Periodic Table of elements, in particular with an Al-alkyl compound.

The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as $AlEt_2Cl$ and $Al_2Et_3Cl_3$ optionally in mixture with said trialkyl aluminum compounds.

The external electron donor compound $ED_{ext}$ optionally used to prepare the said Ziegler-Natta catalysts can be equal to or different from the ED used in the solid catalyst component a). Preferably it is selected from the group consisting of ethers, esters, amines, ketones, nitriles, silanes and their mixtures. In particular it can advantageously be selected from the C2-C20 aliphatic ethers and in particulars cyclic ethers preferably having 3-5 carbon atoms such as tetrahydrofurane and dioxane.

The catalyst component a) is preferably prepolymerized according to known techniques, by producing reduced amounts of polyolefin, preferably polypropylene or polyethylene.

If the solid component a) is treated with the ED compound, the prepolymerization can be carried out either before or after such treatment.

The amount of prepolymer produced can be up to 500 g per of component a). Preferably it is from 0.5 to 20 g per g of solid component a).

The prepolymerization is carried out with the use of a suitable cocatalyst such as organoaluminum compounds that can also be used in combination with an external electron donor compound as discussed above.

It can be carried out at temperatures from 0 to 80°C, preferably from 5 to 70°C, in the liquid or gas phase.

It has been found that by using the above described polymerization catalyst, the polyethylene composition of the present invention can be prepared in a process comprising the following steps, in any mutual order:

a) polymerizing ethylene, optionally together with one or more comonomers, in a gas-phase reactor in the presence of hydrogen;
b) copolymerizing ethylene with one or more comonomers in another gas-phase reactor in the presence of an amount of hydrogen less than step a);

where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones.

In the first polymerization zone (riser), fast fluidization conditions are established by feeding a gas mixture comprising one or more olefins (ethylene and comonomers) at a velocity higher than the transport velocity of the polymer particles. The velocity of said gas mixture is preferably comprised between 0.5 and 15 m/s, more preferably between 0.8 and 5 m/s. The terms "transport velocity" and "fast fluidization conditions" are well known in the art; for a definition thereof, see, for example, "D. Geldart, Gas Fluidisation Technology, page 155 et seq. , J. Wiley & Sons Ltd. , 1986".

In the second polymerization zone (downcomer), the polymer particles flow under the action of gravity in a densified form, so that high values of density of the solid are reached (mass of polymer per volume of reactor), which approach the bulk density of the polymer.

In other words, the polymer flows vertically down through the downcomer in a plug flow (packed flow mode), so that only small quantities of gas are entrained between the polymer particles.

Such process allows to obtain from step a) an ethylene polymer with a molecular weight lower than the ethylene copolymer obtained from step b).

Preferably, a copolymerization of ethylene to produce a relatively low molecular weight ethylene copolymer (step a) is performed upstream the copolymerization of ethylene to produce a relatively high molecular weight ethylene copolymer (step b). To this aim, in step a) a gaseous mixture comprising ethylene, hydrogen, comonomer and an inert gas is fed to a first gas-phase reactor, preferably a gas-phase fluidized bed reactor. The polymerization is carried out in the presence of the previously described Ziegler-Natta catalyst.

Hydrogen is fed in an amount depending on the specific catalyst used and, in any case, suitable to obtain in step a) an ethylene polymer with a melt flow index MIE of 30 g/10 min. or higher. In order to obtain the above MIE range, in step a) the hydrogen/ethylene molar ratio is indicatively from 1 to 5, the amount of ethylene monomer being from 2 to 20% by volume, preferably from 5 to 15% by volume, based on the total volume of gas present in the polymerization reactor. The remaining portion of the feeding mixture is represented by inert gases and one or more comonomers, if any. Inert gases which are necessary to dissipate the heat generated by the polymerization reaction are conveniently selected from nitrogen or saturated hydrocarbons, the most preferred being propane.

The operating temperature in the reactor of step a) is selected between 50 and 120°C, preferably between 65 and 100°C, while the operating pressure is between 0.5 and 10 MPa, preferably between 2.0 and 3.5 MPa.

In a preferred embodiment, the ethylene polymer obtained in step a) represents from 30 to 70% by weight of the total ethylene polymer produced in the overall process, i. e. in the first and second serially connected reactors.

The ethylene polymer coming from step a) and the entrained gas are then passed through a solid/gas separation step, in order to prevent the gaseous mixture coming from the first polymerization reactor from entering the reactor of step b) (second gas-phase polymerization reactor). Said gaseous mixture can be recycled back to the first polymerization reactor, while the separated ethylene polymer is fed to the reactor of step b). A suitable point of feeding of the polymer into the second reactor is on the connecting part between the downcomer and the riser, wherein the solid concentration is particularly low, so that the flow conditions are not negatively affected.

The operating temperature in step b) is in the range of 65 to 95°C, and the pressure is in the range of 1.5 to 4.0 MPa. The second gas-phase reactor is aimed to produce a relatively high molecular weight ethylene copolymer by copolymerizing ethylene with one or more comonomers. Furthermore, in order to broaden the molecular weight distribution of the final ethylene polymer, the reactor of step b) can be conveniently operated by establishing different conditions of monomers and hydrogen concentration within the riser and the downcomer.

To this purpose, in step b) the gas mixture entraining the polymer particles and coming from the riser can be partially or totally prevented from entering the downcomer, so to obtain two different gas composition zones. This can be achieved by feeding a gas and/or a liquid mixture into the downcomer through a line placed at a suitable point of the downcomer, preferably in the upper part thereof. Said gas and/or liquid mixture should have a suitable composition, different from that of the gas mixture present in the riser. The flow of said gas and/or liquid mixture can be regulated so that an upward flow of gas counter-current to the flow of the polymer particles is generated, particularly at the top thereof, acting as a barrier to the gas mixture entrained among the polymer particles coming from the riser. In particular, it is advantageous to feed a mixture with low content of hydrogen in order to produce the higher molecular weight polymer fraction in the downcomer. One or more comonomers can be fed to the downcomer of step b), optionally together with ethylene, propane or other inert gases.

The hydrogen/ethylene molar ratio in the downcomer of step b) is comprised between 0.005 and 0.2, the ethylene concentration being comprised from 0.5 to 15%, preferably 0.5 - 10%, by volume, the comonomer concentration being comprised from 0.1 to 1.5 % by volume, based on the total volume of gas present in said downcomer. The rest is propane or similar inert gases. Since a very low molar concentration of hydrogen is present in the downcomer, by carrying out the present process it is possible to bond a relatively high amount of comonomer to the high molecular weight polyethylene fraction.

The polymer particles coming from the downcomer are reintroduced in the riser of step b).

Since the polymer particles keep reacting and no more comonomer is fed to the riser, the concentration of said comonomer drops to a range of 0.1 to 1.2 % by volume, based on the total volume of gas present in said riser. In practice, the comonomer content is controlled in order to obtain the desired density of the final polyethylene. In the riser of step b) the hydrogen/ethylene molar ratio is in the range of 0.01 to 0.5, the ethylene concentration being comprised between 5 and 20 % by volume based on the total volume of gas present in said riser. The rest is propane or other inert gases.

More details on the above described polymerization process are provided in WO2005019280.

EXAMPLES

The practice and advantages of the various embodiments, compositions and methods as provided herein are disclosed below in the following examples. These Examples are illustrative only, and are not intended to limit the scope of the appended claims in any manner whatsoever.

The following analytical methods are used to characterize the polymer compositions.

### Density

Determined according to ISO 1183 at 23°C.

### HMWcopo Index

In order to quantify the crystallization and processability potential of the polymer, the HMWcopo (High Molecular Weight Copolymer) Index is used, which is defined by the following formula:

$$\mathrm{HMWcopo} = (\eta_{0.02} \text{ x } t_{maxDSC})/(10\char`\^5)$$

It is decreasing with increasing potential of easy processing (low melt-viscosity) and fast crystallization of the polymer. It is also a description and quantification of the amount of high molecular weight fraction, correlating to the melt complex viscosity $\eta_{0.02}$ at the frequency of 0.02 rad/s, and the amount of incorporated comonomer which delays the crystallization, as quantified by the maximum heat flow time for quiescent crystallization, $t_{maxDSC}$. The melt viscosity $\eta_{0.02}$ is determined by a measurement in dynamic oscillatory shear in a parallel plate rotational rheometer (in this case an AntonPaar MCR300), with 25mm diameter plates, at T = 190 °C. Samples are prepared in a melt-press at 200 °C, under 200 bar pressure for 4min, in a plate of thickness of approximately 1mm and stamped out to 25mm diameter discs, which are inserted in the rheometer. The measurement is done in dynamic oscillatory shear mode as a so-called "frequency-sweep", measuring at frequencies from 620 to 0.02 rad/s, under constant strain-amplitude of 5% (in the linear rheological regime). The $t_{maxDSC}$ is determined using a Differential Scanning Calorimetry apparatus, TA Instruments Q2000, under isothermal conditions at a constant temperature of 124 °C. 5-6 mg of sample are weighted and brought into the aluminium DSC pans. The sample is heated with 20K/min up to 200 °C and cooled down also with 20K/min to the test temperature, in order to erase the thermal history. The isothermal test begins immediately after and the time is recorded until crystallization occurs. The time interval until the crystallization heat flow maximum (peak), $t_{maxDSC}$, is determined using the vendor software (TA Instruments). The measurement is repeated 3x times and an average value is then calculated (in min). If no crystallization is observed under these conditions for more than 120 minutes, the value of $t_{maxDSC}$ = 120 minutes is used for further calculations of the HMWcopo index.

The melt viscosity $\eta_{0.02}$ value is multiplied by the $t_{maxDSC}$ value and the product is normalized by a factor of 100000 (10^5).

**Molecular Weight Distribution Determination**

The determination of the molar mass distributions and the mean number average mol. weight Mn was carried out by high-temperature gel permeation chromatography using a method described in ISO 16014-1, -2, -4, issues of 2003. The weight-average mol. weight $M_w$ and the z-average $M_z$, as well as the $M_w/M_n$ derived where determined by the MALLS coupled to the GPC, as described below. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used. The solvent was vacuum destilled under Nitrogen and was stabilized with 0.025% by weight of 2,6-di-tert-butyl-4-methylphenol. The flowrate used was 1 ml/min, the injection was $500\mu$l and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany)) in the range from 580g/mol up to 11600000g/mol and additionally with Hexadecane. The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$= 0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

**Melt flow index**

Determined according to ISO 1133 at 190°C with the specified load.

**Long Chain Branching index (LCBI)**

The LCB index corresponds to the branching factor g', measured for a molecular weight of $10^6$ g/mol. The branching factor g', which allows determining long-chain branches at high Mw, was measured by Gel Permeation Chromatography (GPC) coupled with Multi-Angle Laser-Light Scattering (MALLS). The radius of gyration for each fraction eluted from the GPC (as described above but with a flow-rate of 0.6 ml/min and a column packed with $30\mu$m particles) is measured by analyzing the light scattering at the different angles with the MALLS (detector Wyatt Dawn EOS, Wyatt Technology, Santa Barbara, Calif.). A laser source of 120mW of wavelength 658nm was used. The specific index of refraction was taken as 0.104 ml/g. Data evaluation was done with Wyatt ASTRA 4.7.3 and CORONA 1.4 software. The LCB Index is determined as described in the following.

The parameter g' is the ratio of the measured mean square radius of gyration to that of a linear polymer having the same molecular weight. Linear molecules show g' of 1, while values less than 1 indicate the presence of LCB. Values of g' as a function of mol. weight, M, were calculated from the equation:

$$g'(M) = <Rg^2>_{sample,M}/<Rg^2>_{linear\ ref.,M}$$

where $<Rg^2>$, M is the root-mean-square radius of gyration for the fraction of mol. weight M.

The radius of gyration for each fraction eluted from the GPC (as described above but with a flow-rate of 0.6 ml/min and a column packed with $30\mu$m particles) is measured by analyzing the light scattering at the different angles. Therefore, from this MALLS setup it is possible to determine mol. weight M and $<Rg^2>_{sample,M}$ and to define a g' at a measured M = $10^6$ g/mol. The $<Rg^2>_{linear\ ref.,M}$ is calculated by the established relation between radius-of-gyration and molecular weight for a linear polymer in solution (Zimm and Stockmayer WH 1949)) and confirmed by measuring a linear PE reference with the same apparatus and methodology described.

The same protocol is described in the following documents.
Zimm BH, Stockmayer WH (1949) The dimensions of chain molecules containing branches and rings. J Chem Phys 17
Rubinstein M., Colby RH. (2003), Polymer Physics, Oxford University Press

**Comonomer content**

The comonomer content is determined by means of IR in accordance with ASTM D 6248 98, using an FT-IR spectrometer Tensor 27 from Bruker, calibrated with a chemometric model for determining ethyl- or butyl- side-chains in PE for butene or hexene as comonomer, respectively. The result is compared to the estimated comonomer content derived from the mass-balance of the polymerization process and was found to be in agreement.

**Dart Drop Index (DDI)**

Determined according to ASTM D1709, method A, on a film having thickness of 20 $\mu$m or 10 $\mu$m.

**Bubble stability**

Blown films were produced on an Alpine film blowing plant comprising an extruder with a diameter $D_1$ of 50 mm and a length of $21D_1$ (= 1.05 m) and an annular die having a diameter $D_2$ of 120 mm and a gap width of 1 mm. The films were produced at increasing take-off speeds, thus obtaining decreasing film width values, as detailed below.
Blow-up ratio was of 4:1 and the stalk length of 90 cm.
The melt temperature of the polyethylene composition in the extruder was 225-230°C.
The film bubble stability was determined by the following procedure, including a preliminary test and a shock test as detailed below.
In the preliminary test, the take-off speed was set at predetermined increasing take-off speeds, namely at 35, 58, 63, 70, 77 and 87 m/min (=maximum rolling-up speed). After the respective take-off speed had been attained and the neck length had been adjusted to 90 cm by adjusting the cooling air blower, the axial oscillation of the film bubble was observed.
The test was considered finished and passed at a given speed if the axial oscillation of the bubble being formed was in the range of $\pm2$ cm over a period of observation of one (1) minute.
The shock test was subsequently carried out at the same take-off speed setting as in the preliminary test. In the shock test, the bubble was made axially oscillate. This was performed by fully opening the iris of the cooling air blower for a period of about 7 s. The iris was then reset to the initial position. The opening and closing of the iris was monitored via the pressure of the cooling air. At room temperature greater than 25°C, however, the opening of the above-mentioned iris alone is not sufficient to set the film bubble into oscillation. Accordingly, at temperatures greater than 25°C, the iris was firstly opened and then shut completely for a maximum of 3 s, after which it was reset to the initial position, always monitoring by means of the air pressure. The shock test was considered passed at a given take-off speed if the oscillations of the film bubble had abated to $\pm2$ cm within 2 minutes.
This was made for each one of the above-mentioned increasing take-off speeds. If the shock test or the preliminary test was not passed at a particular take-off speed, the stability grade corresponding to the previous lower take-off speed was awarded.
The below ranking was used to award the stability grade.

| Take-off speed [m/min.] | Stability grade |
|---|---|
| 87 (8 $\mu$m) | 1 |
| 77 (9 $\mu$m) | 2 |
| 70 (10 $\mu$m) | 3 |
| 63 (11 $\mu$m) | 4 |
| 58 (12 $\mu$m) | 5 |
| 35 (20 $\mu$m) | 6 |

- Process Setup

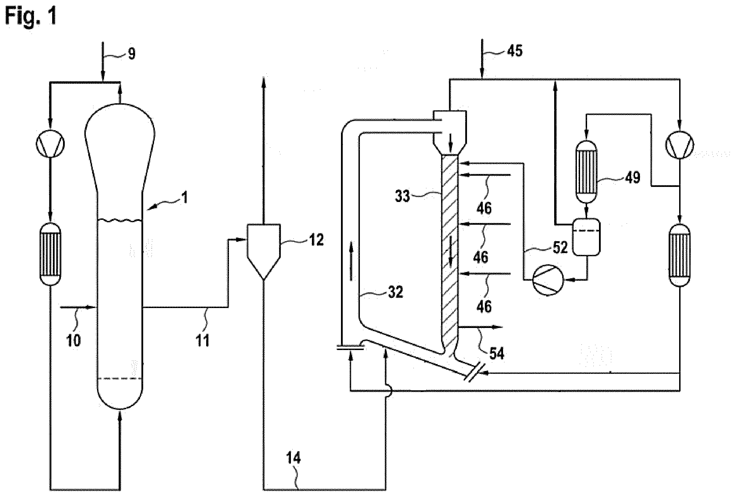

The polymerization process was carried out under continuous conditions in a plant comprising two serially connected gas-phase reactors, as shown in Figure 1.
The polymerization catalyst is prepared as follows.
A magnesium chloride and alcohol adduct containing about 3 mols of alcohol is prepared following the method described in example 2 of United States Patent No. 4,399,054, but working at 2000 RPM instead of 10000 RPM. The adduct is subjected to a thermal treatment, under nitrogen stream, over a temperature range of 50-150 °C until a weight content of 25% of alcohol is reached. Into a 2 L four-necked round flask, purged with nitrogen, 1 L of $TiCl_4$ is introduced at about 0°C. Then, at about the same temperature, 70 g of a spherical $MgCl_2$/EtOH adduct containing 25 %wt of ethanol and prepared as described above is added under stirring. The temperature is raised to about 140°C in about 2 h and maintained for about 60 min. Then, the stirring is discontinued, the solid product is allowed to settle and the supernatant liquid is siphoned off.

The solid residue is then washed once with heptane at 80°C and five times with hexane at 25°C and dried under vacuum at 30°C.

A sufficient amount of solid catalyst component prepared according to the above reported synthetic route was prepolymerized with propylene in amount of 1g polypropylene/g of catalyst component, in accordance with the method described in Example 7 of WO01/85803.

Example 1

9 g/h of the solid catalyst prepared as described above were fed, using 5 kg/h of liquid propane, to a precontacting apparatus, in which also triisobutylaluminum (TIBA) was dosed. The weight ratio between aluminum alkyl and solid catalyst component was 2:1. The precontacting step was carried out under stirring at 40°C with a total residence time of 60 minutes.

The catalyst enters the first gas-phase polymerization reactor 1 of Fig. 1 via line 10. In the first reactor ethylene was polymerized using $H_2$ as molecular weight regulator and in the presence of propane as inert diluent. 48 kg/h of ethylene and 160 g/h of hydrogen were fed to the first reactor via line 9. No comonomer was fed to the first reactor.

The polymerization was carried out at a temperature of 80°C and at a pressure of 2.9 MPa. The polymer obtained in the first reactor was discontinuously discharged via line 11, separated from the gas into the gas/solid separator 12, and reintroduced into the second gas-phase reactor via line 14.

The polymer produced in the first reactor had a melt index MIE of about 40 g/10 min and a density of 0.966 kg/dm$^3$.

The second reactor was operated under polymerization conditions of about 82°C, and a pressure of 2.5 MPa. The riser has an internal diameter of 200 mm and a length of 19 m. The downcomer has a total length of 18 m, an upper part of 5 m with an internal diameter of 300 mm and a lower part of 13 m with an internal diameter of 150 mm. In order to broaden the molecular weight distribution of the final ethylene polymer, the second reactor was operated by establishing different conditions of monomers and hydrogen concentration within the riser 32 and the downcomer 33. This is achieved by feeding via line 52, 200 kg/h of a liquid stream (liquid barrier) into the upper part of the downcomer 33. Said liquid stream has a composition different from that of the gas mixture present in the riser. Said different concentrations of monomers and hydrogen within the riser, the downcomer of the second reactor and the composition of the liquid barrier are indicated in Table 1. The liquid stream of line 52 comes from the condensation step in the condenser 49, at working conditions of 56°C and 2.5 MPa, wherein a part of the recycle stream is cooled and partially condensed. As shown in the figure, a separating vessel and a pump are placed, in the order, downstream the condenser 49. The monomers to the downcomer were fed in 3 positions (lines 46). In dosing point 1, located just below the barrier, 10 kg/h of ethylene and 0.70 kg/h of 1-hexene were introduced. In dosing point 2, located 2.3 meters below dosing point 1, 5 kg/h of ethylene were introduced. In dosing point 3, located 4 meters below dosing point 2, 5 kg/h of ethylene were introduced. In each of the 3 dosing points, a liquid taken from stream 52 was additionally fed in ratio to ethylene of 1:1. 5 kg/h of propane, 30.3 kg/h of ethylene and 11 g/h of hydrogen were fed through line 45 into the recycling system.

The final polymer was discontinuously discharged via line 54.

The polymerization process in the second reactor produced relatively high molecular weight polyethylene fractions. In Table 1 the properties of the final product are specified. It can be seen that the melt index of the final product is decreased as compared to the ethylene resin produced in the first reactor, showing the formation of high molecular weight fractions in the second reactor.

The first reactor produced around 48 % by weight (split wt %) of the total amount of the final polyethylene resin produced by both first and second reactors.

The comonomer (hexene-1) amount was of about 0.7% by weight (as determined by IR).

Example 2

The conditions were the same as compared to example 1 except for a feeding of THF (tetrahydrofuran) to the precontacting apparatus. The ratio between TIBA and THF was 300 g/g.

Example 3

The conditions were the same as compared to example 1 except for a feeding of THF (tetrahydrofuran) to the precontacting apparatus. The ratio between TIBA and THF was 150 g/g.

Comparative Example 1

The polymer of this comparative example is a polyethylene composition available on the market with the commercial name HIZEX 7000F (Prime Polymer Co.).

Table 1

|  | Ex. 1 | Ex. 2 | Ex. 3 | Comp. 1 |
|---|---|---|---|---|
| Operative conditions first reactor |  |  |  |  |
| $H_2/C_2H_4$ Molar ratio | 2.4 | 2.3 | 2.5 | - |
| $C_2H_4$% | 7.7 | 8.3 | 8.1 | - |
| Split (wt%) | 48 | 48 | 48 | - |
| MIE A) | 42 | 44 | 40 | - |
| Operative conditions second reactor |  |  |  |  |
| $H_2/C_2H_4$ Molar ratio riser | 0.13 | 0.14 | 0.13 | - |
| $C_2H_4$% riser | 9 | 13.1 | 15.1 | - |
| $C_6H_{12}$ % riser | 0.18 | 0.3 | 0.35 | - |
| $H_2/C_2H_4$ Molar ratio downcomer | 0.085 | 0.07 | 0.074 | - |
| $C_2H_4$% downcomer | 2.6 | 5.4 | 7 | - |
| $C_6H_{12}$ % downcomer | 0.21 | 0.34 | 0.45 | - |
| $H_2/C_2H_4$ Molar ratio barrier | 0.024 | 0.025 | 0.024 | - |
| $C_2H_4$% barrier | 5.5 | 8 | 9.7 | - |
| $C_6H_{12}$ % barrier | 0.24 | 0.38 | 0.51 | - |
| Polymer properties |  |  |  |  |
| Density (A) [g/cm$^3$] | 0.966 | 0.967 | 0.966 | - |
| MIP final resin [g/10 min.] | 0.19 | 0.24 | 0.2 | 0.21 |
| MIF final resin [g/10 min.] | 6.7 | 7.4 | 5.7 | 8 |
| Density final resin [g/cm$^3$] | 0.953 | 0.953 | 0.952 | 0.953 |
| MIF/MIP final resin | 35.3 | 30.7 | 28.6 | 38.1 |
| $Mw_{\_MALLS}/Mn_{GPC}$ | 28.9 | 37.5 | 20.8 | 48.0 |
| $Mw_{\_MALLS}$ [g/mol] | 568641 | 442889 | 432518 | 508244 |
| $Mz_{\_MALLS}$ [g/mol] | 3393124 | 2468181 | 1716861 | 2689956 |
| LCBI at 1,000,000 g/mol | 0.50 | 0.58 | 0.68 | 0.57 |
| HMWcopo | 7.4 | 4.3 | 7.0 | 463.1 |
| DDI 20$\mu$m / 10 $\mu$m [g] | 240 / 170 | 261 / 265 | 340 / 270 | ~430 / ~380 |
| Bubble stability | 1 | 1 | 1 | ~4-6 |
| Notes : $C_2H_4$= ethylene; $C_6H_{12}$ = hexene; ethylene and hexene amounts are in percent by moles; Split = weight amount of polymer produced in the concerned reactor. | | | | |

**Claims**

1.  A polyethylene composition having the following features:

    1) density from 0.945 to 0.958 g/cm$^3$, in particular from 0.948 to 0.955 g/cm$^3$, determined according to ISO 1183 at 23°C;
    2) ratio MIF/MIP from 20 to 43, in particular from 25 to 40, where MIF is the melt flow index at 190°C with a load of 21.60 kg, and MIP is the melt flow index at 190°C with a load of 5 kg, both determined according to ISO 1133;

3) MIF from 4.0 to less than 8.5 g/10 min., in particular from 4.5 to 8.0 g/10 min.;
4) HMWcopo index from 3.5 to 20;
5) long-chain branching index, LCBI, equal to or lower than 0.82, or lower than 0.80, in particular from 0.82 to 0.45 or from 0.80 to 0.45;

wherein the HMWcopo index is determined according to the following formula:

$$HMWcopo = (\eta_{0.02} \text{ x } t_{maxDSC})/(10^{\wedge}5)$$

where $\eta_{0.02}$ is the complex viscosity of the melt in Pa.s, measured at a temperature of 190°C, in a parallel-plate rheometer under dynamic oscillatory shear mode with an applied angular frequency of 0.02 rad/s; the $t_{maxDSC}$ is the time in minutes required to reach the maximum value of heat flow of crystallization at a temperature of 124 °C under quiescent conditions, measured in isothermal mode in a differential scanning calorimetry apparatus; LCBI is the ratio of the measured mean-square radius of gyration $R_g$, measured by GPC-MALLS, to the mean-square radius of gyration for a linear PE having the same molecular weight,

2. The polyethylene composition of claim 1, consisting of or comprising one or more ethylene copolymers.

3. The polyethylene composition of claims 1 or 2, obtainable by using a Ziegler-Natta polymerization catalyst.

4. The polyethylene composition of claim 3, wherein the Ziegler-Natta polymerization catalyst comprises the product of reaction of:

   a) a prepolymerized solid catalyst component comprising a Ti compound supported on $MgCl_2$;
   b) an organo-Al compound; and optionally
   c) an external electron donor compound.

5. The polyethylene composition of claim 1, having at least one of the following additional features:

   - z-average molecular weight Mz equal to or greater than 1,200,000 g/mol, in particular from 1,200,000 to 3,500,000 g/mol, measured by GPC-MALLS;
   - $M_{w\_MALLS}/M_{n\_GPC}$ values from 15 to 40; preferably from 17 to 37;
   - Comonomer content equal to or less than 2.5% by weight, in particular from 0.8 to 2% by weight, with respect to the total weight of the composition (as determined by IR).

6. The polyethylene composition of claim 1, comprising:

   A) 30 - 70% by weight, preferably 40 - 60% by weight of an ethylene homopolymer or copolymer (the homopolymer being preferred) with density equal to or greater than 0.960 g/cm$^3$ and melt flow index MIE at 190°C with a load of 2.16 kg, according to ISO 1133, of 30 g/10 min. or higher, preferably of 35 g/10 min. or higer;
   B) 30 - 70% by weight. preferably 40 - 60% by weight of an ethylene copolymer having a MIE value lower than the MIE value of A), preferably lower than 0.5 g/10 min.

7. Manufactured articles comprising the polyethylene composition of claim 1.

8. Manufactured articles according to claim 7, in form of mono- or multilayer blown films, wherein at least one layer comprises the polyethylene composition of claim 1.

9. Process for preparing the polyethylene composition of claim 1, wherein all the polymerization steps are carried out in the presence of a Ziegler-Natta polymerization catalyst supported on $MgCl_2$.

10. The process of claim 9, comprising the following steps, in any mutual order:

    a) polymerizing ethylene, optionally together with one or more comonomers, in a gas-phase reactor in the presence of hydrogen;
    b) copolymerizing ethylene with one or more comonomers in another gas-phase reactor in the presence of an amount of hydrogen less than step a);

where in at least one of said gas-phase reactors the growing polymer particles flow upward through a first polymerization zone under fast fluidization or transport conditions, leave said riser and enter a second polymerization zone through which they flow downward under the action of gravity, leave said second polymerization zone and are reintroduced into the first polymerization zone, thus establishing a circulation of polymer between said two polymerization zones

**Patentansprüche**

1. Polyethylenzusammensetzung mit den folgenden Merkmalen:

   1) einer Dichte von 0,945 bis 0,958 g/cm$^3$, insbesondere 0,948 bis 0,955 g/cm$^3$, bestimmt gemäß ISO 1183 bei 23 °C;
   2) einem Verhältnis von MIF/MIP von 20 bis 43, insbesondere von 25 bis 40, wobei MIF der Schmelzflussindex bei 190 °C unter einer Last von 21,60 kg ist und MIP der Schmelzflussindex bei 190 °C unter einer Last von 5 kg ist, wobei beide gemäß ISO 1133 bestimmt werden;
   3) einem MIF von 4,0 bis kleiner als 8,5 g/10 min., insbesondere von 4,5 bis 8,0 g/10 min.;
   4) einem HMWcopo-Index von 3,5 bis 20;
   5) einem langkettigen Verzweigungsindex, LCBI, gleich oder kleiner als 0,82, oder kleiner als 0,80, insbesondere 0,82 bis 0,45 oder von 0,80 bis 0,45;

   wobei der HMWcopo-Index gemäß der folgenden Formel bestimmt wird:

   $$\mathrm{HMWcopo} = (\eta_{0,02} \times t_{\mathrm{maxDSC}}) / (10^5)$$

   wobei $\eta_{0.02}$ die komplexe Viskosität der Schmelze in Pa·s ist, gemessen bei einer Temperatur von 190 °C in einem Parallelplattenrheometer im dynamischen oszillatorischen Schermodus mit einer angelegten Winkelfrequenz von 0,02 rad/s; die $t_{\mathrm{maxDSC}}$ die Zeit in Minuten ist, die erforderlich ist, um den Maximalwert des Wärmeflusses der Kristallisation bei einer Temperatur von 124 °C unter Ruhebedingungen zu erreichen, gemessen im isothermen Modus in einem Differentialscanningkaloriemetriegerät; LCBI das Verhältnis des gemessenen mittleren quadratischen Trägheitsradius $R_g$, gemessen durch GPC-MALLS, zu dem mittleren quadratischen Trägheitsradius für ein lineares PE mit demselben Molekulargewicht ist.

2. Polyethylenzusammensetzung nach Anspruch 1, die aus einem oder mehreren Ethylencopolymeren besteht oder diese umfasst.

3. Polyethylenzusammensetzung nach den Ansprüchen 1 oder 2, die unter Verwendung eines Ziegler-Natta-Polymerisationskatalysators erhältlich ist.

4. Polyethylenzusammensetzung nach Anspruch 3, wobei der Ziegler-Natta-Polymerisationskatalysator das Reaktionsprodukt von

   a) einer vorpolymerisierten festen Katalysatorkomponente, die eine Ti-Verbindung, geträgert auf MgCl$_2$, umfasst;
   b) einer Organo-Al-Verbindung und gegebenenfalls
   c) einer externen Elektronendonorverbindung umfasst.

5. Polyethylenzusammensetzung nach Anspruch 1 mit mindestens einem der folgenden zusätzlichen Merkmale:

   - einem z-Mittel des durchschnittlichen Molekulargewichts Mz gleich oder größer als 1.200.000 g/mol, insbesondere von 1.200.000 bis 3.500.000 g/mol, gemessen mittels GPC-MALLS;
   - Werten für $M_{w\_MALLS}/M_{n\_GPC}$ von 15 bis 40; vorzugsweise 17 bis 37;
   - Comonomergehalt gleich oder kleiner als 2,5 Gew.%, insbesondere 0,8 bis 2 Gew.%, bezogen auf das Gesamtgewicht der Zusammensetzung (bestimmt gemäß IR).

6. Polyethylenzusammensetzung nach Anspruch 1, umfassend:

A) 30 - 70 Gew.%, vorzugsweise 40 - 60 Gew.% eines Ethylenhomopolymers oder -copolymers (wobei das Homopolymer bevorzugt ist) mit einer Dichte gleich oder größer als 0,960 g/cm$^3$ und einem Schmelzflussindex MIE bei 190 °C unter einer Last von 2,16 kg gemäß ISO 1133 von 30 g/10 min. oder höher, vorzugsweise 35 g/10 min. oder höher;

B) 30 - 70 Gew.%, vorzugsweise 40 - 60 Gew.% eines Ethylencopolymers mit einem MIE-Wert, der unter dem MIE-Wert von A) liegt, vorzugsweise unter 0,5 g/10 min.

**7.** Gefertigte Artikel, umfassend die Polyethylenzusammensetzung nach Anspruch 1.

**8.** Gefertigte Artikel nach Anspruch 7 in Form von ein- oder mehrschichtigen Blasfolien, wobei mindestens eine Schicht die Polyethylenzusammensetzung gemäß Anspruch 1 umfasst.

**9.** Verfahren zur Herstellung der Polyethylenzusammensetzung nach Anspruch 1, wobei alle der Polymerisationsschritte in Anwesenheit eines auf MgCl$_2$ geträgerten Ziegler-Natta-Polymerisationskatalysators durchgeführt werden.

**10.** Verfahren nach Anspruch 9, umfassend die folgenden Schritte in beliebiger Reihenfolge:

a) Polymerisieren von Ethylen, gegebenenfalls zusammen mit einem oder mehreren Comonomeren, in einem Gasphasenreaktor in Gegenwart von Wasserstoff;
b) Copolymerisieren von Ethylen mit einem oder mehreren Comonomeren in einem anderen Gasphasenreaktor in Gegenwart einer Menge an Wasserstoff, die geringer als in Stufe a) ist;

wobei in mindestens einem der Gasphasenreaktoren die wachsenden Polymerpartikel durch eine erste Polymerisationszone unter schnellen Verwirbelungs- oder Transportbedingungen aufwärts fließen, das Steigrohr verlassen und in eine zweite Polymerisationszone eintreten, durch die sie unter Einwirkung der Schwerkraft abwärts fließen, die zweite Polymerisationszone verlassen und wieder in die erste Polymerisationszone eingebracht werden, wodurch ein Polymerkreislauf zwischen den beiden Polymerisationszonen eingerichtet wird.

## Revendications

**1.** Composition de polyéthylène ayant les caractéristiques suivantes :

1) une masse volumique allant de 0,945 à 0,958 g/cm$^3$, en particulier allant de 0,948 à 0,955 g/cm$^3$, déterminée selon la norme ISO 1183 à 23 °C ;
2) un rapport MIF/MIP allant de 20 à 43, en particulier allant de 25 à 40, où le MIF est l'indice de fluidité à chaud à 190 °C avec une charge de 21,60 kg, et MIP est l'indice de fluidité à chaud à 190 °C avec une charge de 5 kg, tous deux étant déterminés selon la norme ISO 1133 ;
3) un MIF allant de 4,0 à moins de 8,5 g/10 min, en particulier allant de 4,5 à 8,0 g/10 min ;
4) un indice HMWcopo allant de 3,5 à 20 ;
5) un indice de ramification à chaîne longue, LCBI, égal ou inférieur à 0,82, ou inférieure à 0,80, en particulier allant de 0,82 à 0,45 ou de 0,80 à 0,45 ;

dans laquelle l'indice HMWcopo est déterminé selon la formule suivante :

$$\mathrm{HMWcopo} = (\eta_{0,02} \times t_{maxDSC})/(10\text{^}5)$$

où $\eta_{0,02}$ est la viscosité complexe de la masse fondue en Pa.s, mesurée à une température de 190 °C, dans un rhéomètre à plaques parallèles dans un mode de cisaillement oscillatoire dynamique avec une fréquence angulaire appliquée de 0,02 rad/s ; le $t_{maxDSC}$ est le temps en minutes requis pour atteindre la valeur maximale du flux de chaleur de cristallisation à une température de 124 °C dans des conditions de repos, mesuré en mode isotherme dans un appareil de calorimétrie différentielle à balayage ; LCBI est le rapport du rayon giration $R_g$ quadratique moyen mesuré, mesuré par CPG-MALLS, au rayon de giration quadratique moyen pour un PE linéaire ayant la même masse moléculaire.

**2.** Composition de polyéthylène selon la revendication 1, constituée de ou comprenant un ou plusieurs copolymères d'éthylène.

3. Composition de polyéthylène selon les revendications 1 ou 2, pouvant être obtenue en utilisant un catalyseur de polymérisation Ziegler-Natta.

4. Composition de polyéthylène selon la revendication 3, dans laquelle le catalyseur de polymérisation Ziegler-Natta comprend le produit de réaction de :

a) un composant de catalyseur solide prépolymérisé comprenant un composé de Ti supporté sur $MgCl_2$ ;
b) un composé organo-Al ; et éventuellement
c) un composé donneur d'électrons externe.

5. Composition de polyéthylène selon la revendication 1, ayant au moins l'une des caractéristiques supplémentaires suivantes :

- une masse moléculaire moyenne en z Mz égale ou supérieure à 1 200 000 g/mol, en particulier allant de 1 200 000 à 3 500 000 g/mol, mesurée par CPG-MALLS ;
- des valeurs $M_{w\_MALLS}/M_{n\_CPG}$ allant de 15 à 40 ; de préférence allant de 17 à 37 ;
- une teneur en comonomère égale ou inférieure à 2,5 % en poids, en particulier allant de 0,8 à 2 % en poids, par rapport au poids total de la composition (telle que déterminée par IR).

6. Composition de polyéthylène selon la revendication 1, comprenant :

A) 30-70 % en poids, de préférence 40-60 % en poids d'un homopolymère ou copolymère d'éthylène (l'homopolymère étant préféré) avec une masse volumique égale ou supérieure à 0,960 $g/cm^3$ et un indice de fluidité à chaud MIE à 190 °C avec une charge de 2,16 kg, selon la norme ISO 1133, de 30 g/10 min ou plus, de préférence de 35 g/10 min, ou supérieure ;
B) 30-70 % en poids, de préférence 40-60 % en poids d'un copolymère d'éthylène ayant une valeur MIE inférieure à la valeur MIE de A), de préférence inférieure à 0,5 g/10 min.

7. Articles fabriqués comprenant la composition de polyéthylène selon la revendication 1.

8. Articles fabriqués selon la revendication 7, sous forme de films soufflés mono- ou multicouches, dans lesquels au moins une couche comprend la composition de polyéthylène de la revendication 1.

9. Procédé de préparation de la composition de polyéthylène selon la revendication 1, dans lequel toutes les étapes de polymérisation sont effectuées en présence d'un catalyseur de polymérisation Ziegler-Natta supporté sur $MgCl_2$.

10. Procédé selon la revendication 9, comprenant les étapes suivantes, dans n'importe quel ordre mutuel :

a) polymériser de l'éthylène, éventuellement conjointement avec un ou plusieurs comonomères, dans un réacteur en phase gazeuse en présence d'hydrogène ;
b) copolymériser de l'éthylène avec un ou plusieurs comonomères dans un autre réacteur en phase gazeuse en présence d'une quantité d'hydrogène inférieure à l'étape a) ;

où, dans au moins l'un desdits réacteurs en phase gazeuse, les particules de polymère en croissance s'écoulent vers le haut à travers une première zone de polymérisation dans des conditions de fluidisation ou de transport rapides, quittent ladite colonne montante et entrent dans une seconde zone de polymérisation à travers laquelle elles s'écoulent vers le bas sous l'action de la gravité, quittent ladite seconde zone de polymérisation et sont réintroduites dans la première zone de polymérisation, établissant ainsi une circulation de polymère entre lesdites deux zones de polymérisation.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2256160 A
- US P4298718 A
- US P4495338 A
- US P4469648 A
- US P4399054 A
- WO 9844009 A
- US P5100849 A
- US 4829034 A
- EP 395083 A
- WO 2005019280 A
- US 4399054 A
- WO 0185803 A

### Non-patent literature cited in the description

- **D. GELDART.** Gas Fluidisation Technology. J. Wiley & Sons Ltd, 1986, 155
- **BENOIT H. ; REMPP P. ; GRUBISIC Z.** *J. Polymer Sci., Phys. Ed.,* 1967, vol. 5, 753
- **ZIMM BH ; STOCKMAYER WH.** The dimensions of chain molecules containing branches and rings. *J Chem Phys,* 1949, vol. 17
- **RUBINSTEIN M. ; COLBY RH.** Polymer Physics. Oxford University Press, 2003